# EUROPEAN PATENT SPECIFICATION

(11) **EP 2 041 206 B1**
(45) Date of publication and mention of the grant of the patent: **22.09.2010**
(21) Application number: 07730302.2
(22) Date of filing: 22.06.2007
(51) Int. Cl.: C08J 3/07, C08L 91/06, A23L 1/035, A23L 1/03, C11D 1/66, C09D 5/02

(54) **SURFACE-ACTIVE MATERIAL AND ITS APPLICATIONS**
OBERFLÄCHENAKTIVES MATERIAL UND ANWENDUNGEN DAVON
MATÉRIAU TENSIOACTIF ET SES APPLICATIONS

(30) Priority: 13.07.2006 EP 06117136
(43) Date of publication of application: 01.04.2009
(73) Proprietor: Unilever N.V., 3013 AL Rotterdam (NL); Unilever PLC, London EC4Y 0DY (GB)
(72) Inventor: GOLDING, Matthew, Duncan, Werribee, Victoria 3030 (AU); PAUNOV, Vesselin, Nikolaev, Hull Yorkshire HU6 7RX (GB); STOYANOV, Simeon, Dobrev, NL-3133 AT Vlaardingen (NL)
(74) Representative: Kan, Jacob Hendrik
(86) International application number: PCT/EP2007/056247
(87) International publication number: WO 2008/006691

(56) References cited:
- EP-A- 1 295 594
- WO-A-2006/007393
- US-A- 5 395 877
- US-A- 5 800 604
- US-A1- 2005 137 115
- US-H- H1 839
- PAUL F NOBLE ET AL: "Fabrication of Hairy Colloidosomes with Shells of Polymeric Microrods" JOURNAL OF THE AMERICAN CHEMICAL SOCIETY, AMERICAN CHEMICAL SOCIETY, WASHINGTON, DC, US, vol. 126, no. 26, 10 June 2004 (2004-06-10), pages 8092-8093, XP002355521 ISSN: 0002-7863
- ROSSITZA G ALARGOVA: "Scalable Synthesis of a New Class of Polymer Microrods by a Liquid-Liquid Dispersion Technique" ADVANCED MATERIALS, WEINHEIM, DE, vol. 16, no. 18, 16 September 2004 (2004-09-16), pages 1653-1657, XP002355522
- PAUNOV V N: "Novel Method for Determining the Three-Phase Contact Angle of Colloid Particles Adsorbed at Air-Water and Oil-Water Interfaces" LANGMUIR, ACS, WASHINGTON, DC, US, vol. 19, no. 19, 21 August 2003 (2003-08-21), pages 7970-7976, XP002377711 ISSN: 0743-7463
- ALARGOVA R.G., PAUNOV V.N., VELEV O.D.: "Formation of polymer microrods in shear flow by emulsification solvent attrition mechanism" LANGMUIR, vol. 22, 2006, pages 765-774, XP002408793 cited in the application
- DATABASE WPI Week 198528 Derwent Publications Ltd., London, GB; AN 1985-169075 XP002408795 & JP 60 099333 A (TSUJI SEIYU KK) 3 June 1985 (1985-06-03)

## Description

### FIELD OF THE INVENTION

The invention relates to a new surface-active material and its applications in the areas of foam and emulsion formation and stabilisation, coatings, encapsulation. More in particular, it relates to a surface-active material comprising fibres made of a waxy material and to a method for preparing said surface-active material, as well as to products comprising said surface-active material.

### BACKGROUND TO THE INVENTION

A surface-active agent or surfactant is a substance that lowers the surface tension of the medium in which it is dissolved, and/or the interfacial tension with other phases. Accordingly, it is positively adsorbed at the liquid/vapour and/or at other interfaces.

Surface-active agents are widely used industry, for instance in foods, cleaning compositions and personal care products. In foods, they are used to achieve emulsions of oily and water-phases, such as in fat spreads or mayonnaise. In laundry cleaning applications, they are used to solubilise dirt and keep it is solution, so that it can be effectively removed from the fabric.

For cleaning applications, the surface-active compounds may be chosen from anionic, cationic, nonionic, amphoteric and zwitterionic surfactants. Many suitable surface-active compounds are available and are fully described in the literature, for example, in "Surface-Active Agents and Detergents", Volumes I and II, by Schwartz, Perry and Berch. The most commonly used detergent-active compounds are soaps and synthetic non-soap anionic and nonionic compounds. Examples of anionic surfactants include alkylbenzene sulphonates, particularly linear alkylbenzene sulphonates having an alkyl chain length of C₈-C₁₅; primary and secondary alkylsulphates, particularly C₈-C₁₅ primary alkyl sulphates; alkyl ether sulphates; olefin sulphonates; alkyl xylene sulphonates; dialkyl sulpho-succinates; and fatty acid ester sulphonates. Sodium salts are generally preferred.

Examples of nonionic surfactants include the primary and secondary alcohol ethoxylates, especially the C₈-C₂₀ aliphatic alcohols ethoxylated with an average of from 1 to 20 moles of ethylene oxide per mole of alcohol, and more especially the C₁₀-C₁₅ primary and secondary aliphatic alcohols ethoxylated with an average of from 1 to 10, preferably 3 to 7 moles of ethylene oxide per mole of alcohol. Non-ethoxylated nonionic surfactants include alkylpolyglycosides, glycerol monoethers, and polyhydroxy-amides (glucamide).

The choice of the surface-active material (surfactant), and the amount present, will depend on the intended use of the detergent composition. For fabric washing compositions, different surfactant systems may be chosen, as is well known to the skilled formulator, than for handwashing products or mechanical dishwashing products.

In foods, surface-active materials are commonly used to prepare emulsions. Edible emulsions are used as a base for many types of food products. Mayonnaise compositions, for example, comprise edible oil-in-water emulsions that typically contain between 80 to 85% by weight oil, and egg yolk, salt, vinegar and water. Mayonnaise compositions are enjoyed by many consumers, and particularly, on sandwiches, in dips, with fish and other food applications. The oil present in the edible emulsions used in such food products is generally present as droplets dispersed in the water phase. In addition to droplet size and the amount of droplets dispersed, the close packing of the oil droplets results in the characteristic rheological behaviour of the emulsions used to make the desired food product, such as mayonnaise or margarine.

The surface-active agents that are most commonly used in food applications comprise low molecular weight emulsifiers that are primarily based on fatty acid derivatives. Examples include: lecithin's, monoglycerides (saturated and unsaturated), polysorbate esters (Tweens), sorbitan esters (Spans), polyglycerol esters, propylene glycol monostearate, sodium and calcium stearoyl lactylates, sucrose esters, organic acid (lactic, acetic, tartaric, succinic) esters of monoglycerides. Proteins and other surface-active biopolymers can also be used for this purpose. Typical examples of food proteins include milk proteins (caseins and whey proteins), soy protein, egg protein, lupin protein, pea protein, wheat protein. Examples of other surface-active biopolymers include gum Arabic, modified surface active pectin and OSA modified starch.

Recently, the interest in the study of solid particles as emulsifiers of dispersed systems has been re-awakened. Much of this activity has been stimulated by the research of Binks and co-workers (Binks, B. P. Curr. Opin. Colloid Interface Sci. 2002, 7, 21), though the principles of such stabilisation were observed at least 100 years ago (Ramsden, W. Proc. R. Soc. London 1903, 72, 156). The advantage of particle stabilisation is that it is almost impossible to displace an adsorbed particle once adsorbed to an interface. This gives particle stabilised emulsions and foams excellent stability, especially with respect to ripening mechanisms such as disproportionation.

Whilst the use of particles to stabilise o/w, w/o and duplex emulsions and foams has been amply demonstrated in recent years, much less research has been carried out on non-spherical structures with respect to the stabilisation of interfaces. Furthermore, it has recently been demonstrated by Alargova et al. (Langmuir, 2006, 22, 765-774) that polymer rods can be used to provide interfacial stabilisation to emulsions and foams.

WO-A-06/007393 (North Carolina State University) discloses a process for preparing micro-rods using liquid-liquid dispersion. The method comprises mixing a polymer dissolved in a first solvent with a second solvent to form a dispersed phase of polymer solution droplets and subsequently introducing shear stress such that the polymer solution droplets form micro-rods.

Notwithstanding the fact that many surface-active materials are known and available, there is a continuous need for new alternative or improved surface-active materials, especially environmentally friendly surface-active materials having good biodegradability properties. It is therefore an object of the present invention to provide such surface-active materials. It is a further object to provide surface-active materials that are useful in the stabilisation of emulsions and foams.

Surprisingly, it has now been found that one or more of the above-mentioned objects can be achieved by the surface-active material according to the invention, which is **characterised in that** it comprises fibres made of food-grade waxy material, said material having a contact angle at the air/water or the oil/water interfacebetween 60° and 120°.

The present inventors have found that the shape and size are of critical importance for the colloidal stability of foams and emulsions. Rod-like (fibril) shapes are much more efficient then spherical particles. Another key factor for good foam and emulsion stabilisation is the particle contact angle at oil/water or air/water interface, which must be as close to 90° as possible. The rod-like structures must therefore be amphiphathic in design (o/w and w/o stabilisation depends on the relative balance between hydrophobicity and hydrophilicity).

Waxy materials such Carnauba wax, Shellac or Bee wax are currently used in foods, mainly as coatings because of their very good moisture barrier properties. Their main application is in the confectionary industry: for instance the top coating of Tick-Tack candies is made from Carnauba wax, while top coating of M&M candies is made from Shellac.

### SUMMARY OF THE INVENTION

According to a first aspect, the invention provides a surface-active material which is **characterised in that** it comprises fibres made of a waxy material, said material having a contact angle at the air/water interface or the oil/water interface of between 60° and 120°.

According to a second aspect, there is provided a process for preparing such a surface-active material.

According to a third aspect, there is provided a product comprising said surface-active material for the purpose of foam and emulsion formation and stabilisation, coatings, encapsulation and drug delivery. The fourth aspect involves the application of said surface-active material in home and personal care, foods, oilfield, agriculture, textile, construction, emulsion polymerisation, leather, plastic, pulp, paper and pharma.

### DETAILED DESCRIPTION OF THE INVENTION

In its first aspect, the invention relates to a surface-active material comprising fibres made of a waxy material, said material having a contact angle at the air/water interface or the oil/water interface of between 60° and 120°, giving them surface-active properties and affinity to adsorb at air/water or oil/water surfaces. Preferably the surface-active material has a contact angle between 70° and 110°, preferably between 80° and 100°.

By the word "fibre", we mean in the context of the present invention, any structure made of solidified waxy material, wherein the ratio between the length and the diameter ranges from 10 to infinite. Here, the diameter means the largest distance of the cross-section. The fibre topology might be liner or branched (star-like). The aspect ration in this case is defined as aspect ratio of the longest branch.

The fibres used in the present invention have a length of 0.1 to 100 micrometer, preferably from 1 to 50 micrometer. Their diameter is in the range of 0.01 to 10 micrometer. The aspect ratio (length / diameter) is generally more than 10, preferably more than 20 up to 100 or even 1,000.

The fibres used in the present invention are made of a waxy material, preferably of a wax, more preferably a food-grade wax. A wax is a non-glyceride lipid substance having the following characteristic properties:
- plastic (malleable) at normal ambient temperatures;
- a melting point above approximately 45 °C (which differentiates waxes from fats and oils);
- a relatively low viscosity when melted (unlike many plastics);
- insoluble in water but soluble in nonpolar organic solvents;
- hydrophobic.

Waxes may be natural or artificial, but natural waxes, especially food-grade waxes are preferred. Beeswax, carnauba (a vegetable wax) and paraffin (a mineral wax) are commonly encountered waxes which occur naturally. Some artificial materials that exhibit similar properties are also described as wax or waxy.

Chemically speaking, a wax may be an ester of ethylene glycol (ethane-1,2-diol) and two fatty acids, as opposed to a fats which are esters of glycerine (propane 1,2,3-triol) and three fatty acids. It may also be a combination of other fatty alcohols with fatty acids. It is a type of lipid.

A second aspect of the present invention is a process for the preparation of such a surface-active material, comprising the steps of selecting a waxy material, dissolving it in a first solvent, mixing the solution of the waxy material in the first solvent with a second solvent having an appropriate viscosity, whereby the second solvent is miscible with the first solvent and the waxy material is not soluble in the second solvent, while continuously introducing shear stress, to form a dispersed phase of elongated wax solution droplets which solidify due to dissolution of the first solvent into the second solvent, to form fibres having a contact angle at the air/water interface or the oil/water interface between 60° and 120°.

In the process of the invention, small particles are made from waxy materials to form fibres having a contact angle at the air/water interface between 60° and 120° for stabilisation of foams, or having a contact angle at the oil/water interface between 60° and 120° for stabilisation of emulsions. The oil in the oil/water interface is any triglyceride oil, such as palm oil. Up to now waxy materials have not been used for preparation of micro particulate fiber materials.

Examples of a suitable source for the waxy material are the food-grade waxes carnauba wax, shellac wax or bee wax. This food-grade waxy material can be transformed into micro-particulate fibres by inducing precipitation of a wax solution via solvent change under shear. For instance, the food-grade waxy material is dissolved in high concentration in ethanol and a small amount of this solution is added to a viscous liquid medium and subjected to shearing. This procedure results in the emulsification of the wax solution in the viscous medium, the shear driven elongation of the emulsion drops their successive solidification into rod-like particles due to escape of ethanol into continuous liquid medium, which is assisted by the fact that ethanol is soluble in the liquid medium, while the waxy material is not or poorly soluble therein. After the fibres have been formed they can be extracted and purified by using the natural buoyancy of the wax. In order to facilitate this process the viscosity of continuous liquid phase should be decreased. The inclusion of water effectively thins the solution so that the rods will rise much quicker and a clear separation is seen between the rods and most of the solution. The liquid phase can then be taken and replaced by water several times in order to remove ail solvents other than water. Due the fact that waxy materials have a contact angle at the air-water interface or oil/water interface between 60° and 120°, the micro particulate fibres have affinity for adsorbing at air/water or oil/water surfaces. Therefore, dispersions containing fibres made from food-grade waxy materials can be used for the stabilisation of foams and emulsions, without need to add other surface-active materials as surfactants, proteins or di-block co-polymers such as Pluronics, as discussed above.

If the contact angle is not already in the specified range of between 60° and 120°, the material may optionally be modified so as to give it the correct contact angle between 60° and 120°. The modification of the fibres can be achieved by chemical or physical means. Chemical modification involves esterification or etherification, by means of hydrophobic groups, such like stearate and ethoxy groups, using well-known techniques. Physical modification includes coating of the fibres with hydrophobic materials, for example ethylcellulose or hydroxypropyl-cellulose. Fat and fatty acids such as stearic acid may also be used. The coating can be done using colloidal precipitation using solvent or temperature change, for instance. The physical modification may also involve "decoration" of rod like materials using hydrophobic nanoparticles, for instance silica.

The contact angle of fibres can be measured using the gel-trapping technique as described by technique as described by Paunov (Langmuir, 2003, 19, 7970-7976) or alternatively by using commercial contact angle measurement apparatus such as the Dataphysics OCA20.

The parameters that affect the formation of the waxy fibers, are a.o. the viscosity and the composition of continuous liquid phase, the shearing rate, the initial droplet size, the wax concentration into ethanol solution and the total solution volume. Of these, the parameters with noticeable affects were changes to the stirring media and to the concentration of wax in ethanol. Changes to the standard solvent ratio resulted in greater or lesser shear which had a limited effect on the size of the rods produced. A larger influence is held by the type of solvent used. The inclusion of a small amount of ethanol to the viscous stirring media resulted in shorter but better defined micro rods with much lower flaking. It is thought that the inclusion of ethanol in the stirring media may slow the rate of precipitation of waxy material resulting in smaller micro emulsion droplets, thus giving shorter micro rods. For the influence of the various parameters that affect the formation of the waxy fibers, reference is made to WO-A-06/007393 (North Carolina State University).

A third aspect of the present invention is a product comprising said surface-active material for the purpose of foam and emulsion formation and stabilisation, for instance as foam stabilisers for ice cream, as emulsion stabilisers for mayonnaise or margarine, as foam formation agent and stabiliser for home and personal care products such as toothpaste, and as flotation agent, for instance in the mining industry.

A fourth aspect of the invention is the invention a food product comprising the surface-active material according to the first aspect of the invention, wherein the food product is selected from foamed products such as foams, mousses, ice cream, or emulsified products such as fat-spreads or dressings.

Preferably the food product according to the invention is in the form of a liquid product selected from the group consisting of sauces, soups and drinks.

The invention also provides a process for the preparation of a stabilised food product according to the fourth aspect of the invention, comprising the step of adding the surface-active material according to the first aspect of the invention to a food product.

The industries where the surface-active material of the present invention could be applied include home and personal care, foods, oil industry, agriculture, textile, construction, polymer industry (emulsion polymerisation), leather, plastic, pulp, paper and pharma. Accordingly, a fourth aspect involves the application of said surface-active material in home and personal care, foods, oil industry, agriculture, textile, construction, emulsion polymerisation, leather, plastic, pulp, paper and pharma. They may also be used for coatings, encapsulation and drug delivery.

The invention provides the use of the surface-active material according to the first aspect of the invention for foam and emulsion formation and stabilisation, coatings, encapsulation and drug delivery.

Preferably the use of the surface-active material is in the following industries: home and personal care, foods, oilfield, agriculture, textile, construction, emulsion polymerisation, leather, plastic, pulp, paper and pharma.

The invention will now be further illustrated by means of the following non-limiting examples.

### Example 1

### Materials:

Shellac Wax: Supplied by NB Entrepreneurs, 100g of refined shellac wax. This was then purified by dissolving the wax in boiling ethanol with removal of insoluble materials via centrifugation. The ethanol was then removed under vacuum with gentle heating yielding the purified shellac crystals.
Glycerol: Alfa Aesar, 99+%.
Ethanol: Fischer Scientific
Ethylene Glycol: Fischer Scientific

Shellac rods were precipitated by dropping droplets containing 50%wt shellac in ethanol into 40ml solution consisting of 60:30:10 glycerol/ethylene glycol/ethanol stirred at speed 5.7 on an IK A RH KT/C magnetic stirrer/hotplate. 170µl of 50%wt shellac solution in ethanol was added in 10µl increments to the viscous stirring media, which equates to 0.085g of wax. After dropping has been finished the total solution was stirred for 10 additional minutes to insure solidification of the fibre. The waxy micro rods prepared as described above were extracted and purified by using the natural buoyancy of the wax: 40ml solution containing waxy fibres as described above was transferred into three sample tubes (75mm x 25mm), with washings (milli-Q), and then topped up with milli-Q water till % full. The tubes were then inverted, but not shaken, several times in order to mix the solvents. The inclusion of water effectively thinned the solution so that the rods would rise much quicker and a clear separation was seen between the rods and most of the solution. The liquid phase can then be taken and replaced by water several times in order to remove all solvents other than water, finally the rods can be re-dispersed in a known volume of water thus giving a solution with an approximate concentration of rods. The concentration is approximate due to the fact that in the cleaning and separating process some rods will be lost; this is estimated to be of the order of 5% of the initial weight of wax solution dropped into the stirring liquid. Thus, when cleaned and re-dispersed in 20ml of water in a sample tube, with an approximate 5% loss, gave a 0.4%wt concentration of shellac fibres in water with average length of 120µm and diameter of 2µm. When the solution is manually shaken for 30 sec it produces a foam that is stable for more then one week. Using confocal microscopy, a dense network of shellac fibres could be clearly seen on the bubble surface.

### Example 2

Shellac rods were precipitated from 17.5%wt shellac in ethanol into 40ml of 60:30:10 glycerol/ethylene glycol/ethanol stirred at speed 5.7 on an IK A RH KT/C magnetic stirrer/hotplate: 480µl of 17.5%wt shellac solution was added in 10µl increments to the viscous stirring media, this again equates to 0.084g of wax. When cleaned and re-dispersed in 20ml of water in a sample tube, with an approximate 5% loss, gave a 0.4%wt concentration of shellac in water. The rod length produced using this method was 30µm on average. When the solution is manually shaken for 30 sec it produces a foam that is stable for more then one week. Using confocal microscopy, a dense network of shellac fibers could be clearly seen on the bubble surface.

### Example 3

Three separate concentrations of rods in milli-Q water were produced, 0.5%wt, 1.2%wt and 2.0%wt. They were produced in the same way as in example 1 except for the amount of shellac added, also the solutions were now in 10ml measuring cylinders, so that foam volume can be measured directly, and the rods needed to be in 4ml of water. However, during the cleaning process the rods are never completely out of solution and so this provides a problem with having an accurate volume of water in the final dispersion. To overcome this problem the volume of water is deduced by weight. The measuring cylinder is weighed when empty and then the wet rods are transferred to the cylinder along with washings, the cylinder is then weighed again and water is added until the final weight is 4g, plus the weight of the wax, more than the empty measuring cylinder. Thus there is 4ml of milli-Q water in the dispersion. Dispersions with three different concentrations of shellac fibers were prepared as described above using following conditions and concentrations:
- 0.5%wt-110µl in 10µl increments of the 20%wt shellac in ethanol was pippetted into a 40ml stirring solution of 85:15 glycerol/water at speed 6.0.
- 1.2%wt-250µl in 10µl increments of the 20%wt shellac in ethanol was pippetted into a 40ml stirring solution of 85:15 glycerol/water at speed 6.0.
- 2.0%wt-420µl in 10µl increments of the 20%wt shellac in ethanol was pippetted into a 40ml stirring solution of 85:15 glycerol/water at speed 6.0.

All rod dispersions were cleaned and separated and finally transferred as previously stated. The resulting dispersions were shaken as before, 30secs using manual shaking. Resulting foams were measured in mls and monitored at the same time intervals as before, 0h, 1h, 2h, 5h, 24h, 48h, 72h, 96h, 120h, 144h, and 168h. For all foams produced, the most rapid reduction in foam volume was observed in the first 5 hours, which is manly due to liquid drainage, after which a near plateau in stability is observed for at more then 7 days. Furthermore, it was found that there is an approximately linear relationship between the concentration of the rods in solution and the volume of foam produced.

## Claims

1. Surface-active material comprising fibres made of a waxy material, said material having a contact angle at the air/water interface or the oil/water interface of between 60° and 120°.

2. Surface-active material according to claim 1, having a contact angle between 70° and 110°, preferably between 80° and 100°.

3. Surface-active material according to any one of the preceding claims, wherein the fibres are made of a food grade waxy material.

4. Surface-active material according to any one of the preceding claims, wherein the fibres have a length of 0.1 to 100 micrometer, preferably from 1 to 10 micrometer.

5. Surface-active material according to any one of the preceding claims, wherein the fibres have an aspect ratio of more than 10 to 100 or even 1,000.

6. Surface-active material according to any one of the preceding claims, wherein the fibres are made of carnauba or shellac wax or bee wax.

7. Process for the preparation of a surface-active material according to any one of the preceding claims, comprising the steps of selecting a waxy material, dissolving it in a first solvent, mixing the solution of the waxy material in the first solvent with a second solvent having an appropriate viscosity, whereby the second solvent is miscible with the first solvent and the waxy material is not soluble in the second solvent, while continuously introducing shear stress, to form a dispersed phase of elongated wax solution droplets which solidify due to dissolution of the first solvent into the second solvent to form fibres.

8. Food product comprising the surface-active material according to any one of claims 1-6, wherein the food product is selected from foamed products such as foams, mousses, ice cream, or emulsified products such as fat-spreads or dressings.

9. Food product according to claim 8, in the form of a liquid product selected from the group consisting of sauces, soups and drinks.

10. Process for the preparation of a stabilised food product according to claims 8-9, comprising the step of adding the surface-active material according to claims 1 to 6 to a food product.

11. Use of the surface-active material according to claims 1-6 for foam and emulsion formation and stabilisation, coatings, encapsulation and drug delivery.

12. Use according to claim 11, in the following industries: home and personal care, foods, oilfield, agriculture, textile, construction, emulsion polymerisation, leather, plastic, pulp, paper and pharma.

## Patentansprüche

1. Oberflächenaktives Material, das aus einem Wachsmaterial hergestellte Fasern umfasst, wobei das Material einen Kontaktwinkel an der Luft/Wasser-Grenzfläche oder der Öl/Wasser-Grenzfläche zwischen 60° und 120° hat.

2. Oberflächenaktives Material nach Anspruch 1, das einen Kontaktwinkel zwischen 70° und 110°, vorzugsweise zwischen 80° und 100°, hat.

3. Oberflächenaktives Material nach einem der vorangehenden Ansprüche, wobei die Fasern aus einem Wachsmaterial mit Lebensmittelqualität hergestellt sind.

4. Oberflächenaktives Material nach einem der vorangehenden Ansprüche, wobei die Fasern eine Länge von 0,1 bis 100 Mikrometer, vorzugsweise von 1 bis 10 Mikrometer, haben.

5. Oberflächenaktives Material nach einem der vorangehenden Ansprüche, wobei die Fasern ein Dimensionsverhältnis von mehr als 10 bis zu 100 oder sogar 1000 halben.

6. Oberflächenaktives Material nach einem der vorangehenden Ansprüche, wobei die Fasern aus Carnauba- oder Schellackwachs oder Bienenwachs hergestellt sind.

7. Verfahren zur Herstellung eines oberflächenaktiven Materials nach einem der vorangehenden Ansprüche, umfassend die Schritte: Auswählen eines Wachsmaterials, Lösen desselben in einem ersten Lösungsmittel, Mischen der Lösung des Wachsmaterials in dem ersten Lösungsmittel mit einem zweiten Lösungsmittel, das eine geeignete Viskosität hat, wobei das zweite Lösungsmittel mit dem ersten Lösungsmittel mischbar ist und das Wachsmaterial in dem zweiten Lösungsmittel nicht löslich ist, während kontinuierlich Scherspannung angelegt wird, um eine dispergierte Phase von länglichen Wachslösungströpfchen zu bilden, welche sich infolge der Lösung des ersten Lösungsmittels in dem zweiten Lösungsmittel unter Bildung von Fasern verfestigen.

8. Nahrungsmittelprodukt, umfassend das oberflächenaktive Material nach einem der Ansprüche 1 bis 6, wobei das Nahrungsmittelprodukt aus geschäumten Produkten, zum Beispiel Schäume, Mousse, Eiscreme, oder emulgierten Produkten, zum Beispiel Fettaufstriche oder Dressings, ausgewählt ist.

9. Nahrungsmittelprodukt nach Anspruch 8 in der Form eines flüssigen Produkts, ausgewählt aus der Gruppe, bestehend aus Soßen, Suppen und Getränken.

10. Verfahren zur Herstellung eines stabilisierten Nahrungsmittelprodukts gemäß den Ansprüchen 8 bis 9, umfassend den Schritt eines Zugebens des oberflächenaktiven Materials nach den Ansprüchen 1 bis 6 zu einem Nahrungsmittelprodukt.

11. Verwendung des oberflächenaktiven Materials nach den Ansprüchen 1 bis 6 zur Schaum- und Emulsionsbildung und Stabilisierung, für Beschichtungen, Einkapselung und Wirkstoffabgabe.

12. Verwendung nach Anspruch 11 in den folgenden Industrien: Haus- und Körperpflege, Nahrungsmittel, Ölfeld, Landwirtschaft, Textilien, Bauwesen, Emulsionspolymerisation, Leder, Kunststoff, Pulpe, Papier und Pharma.

## Revendications

1. Matériau tensioactif comprenant des fibres réalisées à partir d'un matériau cireux, ledit matériau ayant un angle de contact au niveau de l'interface air/eau ou de l'interface huile/eau compris entre 60° et 120°.

2. Matériau tensioactif selon la revendication 1, ayant un angle de contact compris entre 70° et 110°, de préférence entre 80° et 100°.

3. Matériau tensioactif selon l'une quelconque des revendications précédentes, dans lequel les fibres sont réalisées avec un matériau cireux de qualité alimentaire.

4. Matériau tensioactif selon l'une quelconque des revendications précédentes, dans lequel les fibres ont une longueur de l'ordre de 0,1 à 100 micromètres, de préférence de l'ordre de 1 à 10 micromètres.

5. Matériau tensioactif selon l'une quelconque des revendications précédentes, dans lequel les fibres ont un rapport d'aspect supérieur à 10 à 100 ou même à 1 000.

6. Matériau tensioactif selon l'une quelconque des revendications précédentes, dans lequel les fibres sont réalisées à partir de carnauba ou cire de gomme-laque ou de cire d'abeilles.

7. Procédé pour la préparation d'un matériau tensioactif selon l'une quelconque des revendications précédentes, comprenant les étapes consistant à sélectionner un matériau cireux, le dissoudre dans un premier solvant, mélanger la solution de matériau cireux dans le premier solvant avec un second solvant ayant une viscosité appropriée, moyennant quoi le second solvant peut se mélanger avec le premier solvant et le matériau cireux n'est pas soluble dans le second solvant, tout en introduisant de manière continue une contrainte de cisaillement, afin de former une phase dispersée de gouttes de solution de cire allongées qui se solidifient en raison de la dissolution du premier solvant dans le second solvant afin de former des fibres.

8. Produit alimentaire comprenant le matériau tensioactif selon l'une quelconque des revendications 1 à 6, dans lequel le produit alimentaire est choisi parmi des produits en mousse tels que les mousses, les mousses (dessert), les crèmes glacées ou les produits émulsifiés tels que les pâtes à tartiner ou les assaisonnements.

9. Produit alimentaire selon la revendication 8, se présentant sous la forme d'un produit liquide choisi dans le groupe comprenant les sauces, les soupes et les boissons.

10. Procédé pour la préparation d'un produit alimentaire stabilisé selon les revendications 8 à 9, comprenant l'étape consistant à ajouter un matériau tensioactif selon les revendications 1 à 6 à un produit alimentaire.

11. Utilisation du matériau tensioactif selon les revendications 1 à 6 pour la formation et la stabilisation de mousse et d'émulsion, les enrobages, l'encapsulation et la distribution de médicament.

12. Utilisation selon la revendication 11, dans les industries suivantes : les soins à domicile et les soins personnels, les produits alimentaires, un champ pétrolifère, l'agriculture, le textile, la construction, la polymérisation d'émulsion, le cuir, le plastique, la pâte à papier, le papier et la pharmacie.
